# EUROPÄISCHE PATENTSCHRIFT

(11) **EP 0 980 815 B1**
(45) Veröffentlichungstag und Bekanntmachung des Hinweises auf die Patenterteilung: **14.05.2003**
(21) Anmeldenummer: 99113895.9
(22) Anmeldetag: 16.07.1999
(51) Int. Cl.: B62D 21/15, B60R 19/00, B60R 21/00

(54) **Schutzanordnung an einem Radlauf einer Kraftwagen-Rohbaustruktur**
Protection device in a wheel arch of a motor vehicle shell structure
Dispositif de protection dans un passage de roue d'une coque autoporteuse d'un véhicule automobile

(30) Priorität: 14.08.1998 DE 19836851
(43) Veröffentlichungstag der Anmeldung: 23.02.2000
(73) Patentinhaber: DaimlerChrysler AG, 70567 Stuttgart (DE)
(72) Erfinder: Brämig, Falk-Hagen, 71083 Herrenberg (DE); Epple, Günther, 72108 Rottenburg (DE); Harloff, Bernd, Dr., 71034 Böblingen (DE); Zimmermann, Rolf, 71139 Ehningen (DE)

(56) Entgegenhaltungen:
- WO-A-94/06669
- DE-A- 2 257 940
- DE-A- 3 243 756
- DE-A- 19 544 424
- US-A- 4 712 829
- US-A- 5 275 436
- US-A- 5 803 533

## Beschreibung

Die Erfindung betrifft eine Schutzanordnung an einem Radlauf einer Kraftwagen-Rohbaustruktur der im Oberbegriff des Patentanspruchs 1 angegebenen Art.

Eine solche Schutzanordnung an einem Radlauf einer Kraftwagen-Rohbaustruktur, von der im Oberbegriff des Patentanspruchs 1 ausgegangen wird, ist aus der DE-A-32 43 756 bekannt.

Die Funktion der Abweiselemente besteht darin, die bei einem Frontalaufprall sich nach hinten gegen die Abweiselemente bewegenden Vorderräder nach außen aus dem Radlauf zu leiten und dadurch aus dem Verformungsweg herauszunehmen. Durch die Abweisung der Vorderräder nach schräg außen und hinten soll unter anderem eine Deformation der Stirnwand des Fahrzeuges und ein Eindringen der Felge in den Fußraum verhindert werden.

Da die Vorderräder im Falle eines Frontalaufpralls durch die Abweiselemente aus den Radläufen heraus nach schräg außen und hinten in den Bereich der beiden vorderen Türen abgewiesen werden, hat diese Schutzanordnung den Nachteil, daß die vorderen Türen bei einem stärkeren Unfall eventuell nur noch teilweise und unter großem Kraftaufwand oder sogar gar nicht mehr zu öffnen sind, wodurch einem Unfallopfer der Ausstieg aus dem Fahrzeug erschwert wird.

Aufgabe der Erfindung ist es daher, eine Schutzanordnung an einem Radlauf einer Kraftwagen-Rohbaustruktur der im Oberbegriff des Patentanspruchs 1 angegebenen Art zu schaffen, die die Stirnwand vor einer übermäßigen Deformation und Intrusion durch das Rad schützt und eine Abweisbewegung des Rades aus dem Radlauf heraus in den Bereich seitlich der Türen verhindert.

Diese Aufgabe wird erfindungsgemäß durch eine Schutzanordnung an einem Radlauf einer Kraftwagen-Rohbaustruktur mit den Merkmalen des Patentanspruchs 1 gelöst.

Bei der Schutzanordnung nach der Erfindung ist eine Zugstrebe als Mittel zum Schutz der Stirnwand vor übermäßiger Intrusion so innerhalb des Radlaufes mit einem Befestigungsabschnitt an dem zugeordneten Längsträger befestigt, daß sie mit einem seitlich und quer zu dem Längsträger nach außen abragenden Fangabschnitt ein bei einem Unfall betroffenes und nach hinten bewegtes Rad in seiner Bewegung abstoppt und somit eine übermäßige Deformation bzw. Intrusion der Stirnwand durch das Rad verhindert. Dadurch können Verletzungen von Passagieren insbesondere im Bereich der Füße, Oberschenkel oder Knie beträchtlich gesenkt werden. Natürlich ist die Zugstrebe im Bereich zwischen dem Befestigungs- und dem Fangabschnitt entsprechend stabil ausgeführt, um den entstehenden Kräfte, insbesondere Zug- und Biegekräfte, standzuhalten und auf den Längsträger zu übertragen.

Dabei hat sich die Schutzanordnung insbesondere bei einem versetzten Frontalaufprall mit einer geringen Breitenüberdeckung der beteiligten Kraftwagen und bei einem direkten Aufprall von schräg vorne auf das Vorderrad als besonders vorteilhaft erwiesen. Dabei werden die inneren, in diesem Fall vorderen Längsträger nicht von vorne getroffen und somit nicht als Knautschzone aktiviert. Durch die Befestigung der Zugstrebe an dem Längsträger ist es möglich, bei einer solchen, oben beschriebenen Unfallkonstellation die Energie des durch die Zugstrebe abgefangenen Vorderrades auf den Längsträger zu übertragen und dadurch die Knautschzone im Bereich auf Höhe der Vorderräder zu aktivieren. Da der Befestigungsabschnitt der Zugstrebe ausreichend weit vorne an dem Längsträger befestigt ist, kann ein entsprechend großer Teil des Längsträgers und damit auch der vorderen Knautschzone des Fahrzeuges zur Aufnahme vorwiegend einer Zugkraft und zum Abbau der Unfallenergie eingesetzt werden. Somit ergibt sich durch die verbesserte Energieaufnahme des gesamten betroffenen Abschnittes der Rohbaustruktur ein deutlich verbessertes Unfallverhalten.

Bei einem Frontalaufprall mit größerer Breitenüberdeckung und insbesondere mit höheren Geschwindigkeiten des oder der Fahrzeuge schafft die Schutzanordnung nach der Erfindung den Vorteil, daß die nach der Deformation der vorderen Knautschzone einsetzende Bewegung des Vorderrades abgefangen und deren Bewegungsenergie auf den Längsträger übertragen wird, so daß die restliche vordere Knautschzone im Bereich der vorderen Radläufe optimal eingesetzt wird.

Die Schutzanordnung kann sowohl an den Vorderrädern im Bereich der vorderen Knautschzone als auch im Bereich der Hinterräder und der hinteren Knautschzone eingesetzt werden. Nicht nur aufgrund der Tatsache, daß der Fahrerplatz immer belegt ist, ist die Schutzanordnung besonders bevorzugt an dem Radlauf auf der vorderen Fahrerseite angeordnet. Für den Fahrer ergeben sich die weiteren Vorteile, daß die Gefahr eines Eindringens der Pedale in den Fußraum und die Gefahr eines Aufsteigens des Lenkrades bedeutend reduziert werden kann.

Vorteilhafte Ausführungsformen der erfindungsgemäßen Schutzanordnung an einem Radlauf einer Kraftwagen-Rohbaustruktur mit zweckmäßigen Weiterbildungen der Erfindung sind in den abhängigen Ansprüchen angegeben.

Gemäß der Erfindung wird die Zugstrebe zwischen dem inneren Längsträger und einem Endabschnitt eines seitlichen Längsträgers oder Längsträgerabschnitts angeordnet, wobei die Zugstrebe zusätzlich an dem Endabschnitt des seitlichen Längsträgers befestigt ist. Durch diese Maßnahme ergibt sich eine stabile Schutzanordnung mit einem besonders günstigen Unfallverhalten, da ein großer Abschnitt der Rohbaustruktur, die sowohl den inneren als auch den seitlichen Längsträger umfaßt, mit der Energie des sich bewegenden Rades beaufschlagt werden kann. Mit anderen Worten kann dadurch zusätzlich zu dem vorderen Längsträger auch der seitliche Längsträger zur Absorption der entstandenen Energie eingesetzt werden.

Ist die Zugstrebe mit einem je nach Rohbaustruktur unterschiedlichen Mindestabstand vor der Stirnwand angeordnet, so kann sie beim Auftreffen des nach hinten bewegten Vorderrades zur Energieaufnahme um den Mindestabstand nach hinten deformiert werden, ohne daß dies eine Deformation der Stirnwand zur Folge hat. Im Ergebnis wird dadurch eine besonders sichere Schutzanordnung geschaffen, die auch bei schweren Unfällen das übermäßige Eindringen des Rades in die Stirnwand vermeidet.

Durch die Festlegung der Zugstrebe unterhalb oder auf Höhe einer horizontalen Ebene durch die Radachse des Vorderrades wird das im Crashfall nach hinten bewegte Rad im Bereich seines Abroliumfangs abgestoppt und gleichzeitig ein übermäßiges Eindringen des Vorderrades in die Stirnwand oberhalb oder unterhalb der Zugstrebe verhindert.

Schließt der Fangabschnitt der Zugstrebe mit einem Seitenabschnitt des inneren Längsträgers einen Winkel von etwa 100 - 140° ein und ist gegen das vordere Ende des seitlichen Längsträgers gerichtet, so daß die Zugstrebe das Rad im Crashfall in Richtung auf das vordere Ende des seitlichen Längsträger zuleitet, so hat das den Vorteil, daß möglichst viel Energie durch die Zugstrebe auf den seitlichen Längsträger abgeleitet und durch diesen abgebaut werden kann. Somit übt die Zugstrebe nicht nur eine Rückhaltefunktion auf das Vorderrad aus, sondern gleichzeitig auch eine Führungsfunktion in Richtung auf das vordere Ende des seitlichen Längsträgers aus. Zudem ist der Winkel so gewählt, daß im Crashfall die von der Zugstrebe auf den inneren Längsträger ausgeübte Zugkraft vektoriell betrachtet größtenteils in Längsrichtung des Längsträgers eingeleitet wird und damit der vordere Längsträger vorteilhaft zum Abbau eines Teils der Unfallenergie eingesetzt wird.

Zudem hat es sich als Vorteil gezeigt, die Zugstrebe mit Schraubverbindungen an dem Endabschnitt des seitlichen Längsträgers sowie dem inneren Längsträger lösbar zu befestigen. Dadurch kann die Zugstrebe auch als separates Nachrüstteil bei Fahrzeugen eingebaut werden, deren Rohbaustruktur einen seitlichen, an den vorderen Radlauf grenzenden Längsträger und einen inneren Längsträger aufweist. Damit ist es möglich, auch das Crashverhalten von älteren, ohne diese Zugstrebe ausgestatteten Fahrzeugen deutlich zu verbessern, sofern die Festlegung der Zugstrebe an dem inneren und ggf. seitlichen Längsträger vorgenommen werden kann. Ist die Zugstrebe infolge eines leichten Unfalls beim Ausüben ihrer Funktion beschädigt worden, so kann sie durch die Schraubverbindung auf einfache Weise gegen eine neue Zugstrebe ausgetauscht werden.

Auch hat es sich als bevorzugt erwiesen, daß die Zugstrebe zum Herstellen der Schraubverbindung mit Langlöchern versehen ist, die dem horizontalen und vertikalen Toleranzausgleich der Schutzanordnung dienen. Die Zugstrebe kann damit paßgenau angepaßt werden, um im Crashfall einen größtmöglichen Schutz gegen ein Auftreffen des Rades auf der Stirnwand zu gewährleisten. Durch diese Anpassungsmöglichkeit ist die Zugstrebe außerdem für mehrere unterschiedliche Fahrzeugmodelle verwendbar.

Wird die Zugstrebe bereits bei der Herstellung des Fahrzeugs vorgesehen, so kann diese in weiterer Ausgestaltung der Erfindung unlösbar mit einer Schweiß- oder Nietverbindung oder dgl. an dem Endabschnitt des seitlichen Längsträgers und dem vorderen Längsträger befestigt sein. Dadurch wird eine besonders haltbare Verbindung zwischen den Längsträgern und der Zugstrebe geschaffen, die großen Verformungs- und Zugkräften standhält.

Als besonders bevorzugt hat es sich zudem erwiesen, den Endabschnitt des seitlichen Längsträgers als Pralltopf auszubilden. Dieser Pralltopf hat die Eigenschaft, bei einem Unfall besonders viel Unfallenergie absorbieren zu können, um somit insbesondere auch die in Fahrtrichtung hinter dem Pralltopf liegende Rohbaustruktur zu entlasten und deren Verformung bei einem Unfall zu verringern.

In weiterer Ausgestaltung der Erfindung ist die Zugstrebe aus einem Faserverbundwerkstoff, einem hochfestem Metallwerkstoff, z.B. einem profilierten Zugband aus Stahlblech oder dgl. hergestellt, der zur Aufnahme von hohen Verformungskräften geeignet ist. In einer einfachen Ausführung kann dabei die Zugstrebe abschnittsweise aus einem Stahlseil gefertigt sein, welches hinreichend reißfeste und verformbare Eigenschaften aufweist.

Bei Crashversuchen hat sich eine Zugstrebe als besonders vorteilhaft erwiesen, die aus einem Rohr, insbesondere ovalen Querschnitts, gefertigt ist und deren Enden im Bereich der Befestigungsabschnitte flachgedrückt sind. Diese Zugstrebe ist besonders biege- und reißfest und weist gute Energieaufnahmeeigenschaften auf, so daß ein an die Zugstrebe anlaufendes Rad relativ weich in seiner Bewegung verzögert und dadurch die Rohbaustruktur zusätzlich entlastet wird. Durch die flachgedrückten Befestigungsabschnitte an den Enden der Zugstrebe läßt sich eine besonders zugfeste und paßgenaue Verbindung zwischen der Zugstrebe und den zugeordneten Aufnahmen an den Längsträgern schaffen.

Die Zugstrebe weist bei einer besonders vorteilhaften Ausführung eine Anlaufabkröpfung auf, die sich etwa in Verlängerung der inneren Längsträgerflanke des seitlichen Längsträgers befindet. Bei einem versetzten oder geraden Frontalaufprall bietet die Anlaufabkröpfung einen Anschlag für ein inneres oder äußeres Felgenhorn der Vorderradfelge, so daß das Vorderrad in seiner Bewegungsrichtung auf den Bereich des Endabschnitts des seitlichen Längsträgers zubewegend gehalten wird und auf diesen zum Abbau der Crashenergie auftrifft. Somit kann das Vorderrad je nach Einschlagwinkel zum Zeitpunkt des Frontalaufpralls mit Hilfe der Anlaufabkröpfung und dem daran anlaufenden Felgenhorn möglichst im Bereich des seitlichen Längsträgers und damit auch möglichst weit entfernt von dem Fußraum der Frontpassagiere gehalten werden. Mit anderen Worten kann durch das an diese Anlaufabkröpfung anlaufende Felgenhorn eine durch den Frontaufprall eingeleitete Lenkbewegung bzw. Einschlagbewegung des Vorderrades abgestoppt und das Vorderrad in Richtung des seitlichen Längsträgers gehalten werden.

Ein weiterer Vorteil der Anlaufabkröpfung ist es, daß der Abstand der Zugstrebe im Bereich der Stirnwand zu derselben vergrößert wird und dadurch bei einem Frontalaufprall ein größerer Verformungsweg der Zugstrebe zu Verfügung steht. Zudem trägt die Anlaufabkröpfung zu einem weicheren Abbremsen des Vorderrades bei.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1: eine ausschnittweise, perspektivische Unteransicht eines Kraftfahrzeuges mit einer erfindungsgemäßen Schutzanordnung an einem vorderen Radlauf;
- Fig. 2: eine Perspektivansicht der erfindungsgemäßen, innerhalb eines Radlaufes angeordneten Schutzanordnung mit einer Zugstrebe nach einer ersten Ausführungsform;
- Fig. 3: eine weitere Perspektivansicht der erfindungsgemäßen, innerhalb des Radlaufes angeordneten Schutzanordnung mit einer Zugstrebe nach einer zweiten Ausführungsform;
- Fig. 4: eine ausschnittweise Unteransicht auf die erfindungsgemäße Schutzanordnung mit der zwischen dem inneren und dem seitlichen Längsträger angeordneten Zugstrebe gemäß Fig.3;
- Fig. 5: eine perspektivische Darstellung der Zugstrebe gemäß den Fig.3 und 4;
- Fig. 6: eine Schnittansicht durch einen Fangabschnitt der Zugstrebe nach Fig.5;
- Fig. 7: eine Seitenansicht der Zugstrebe nach Fig.5.

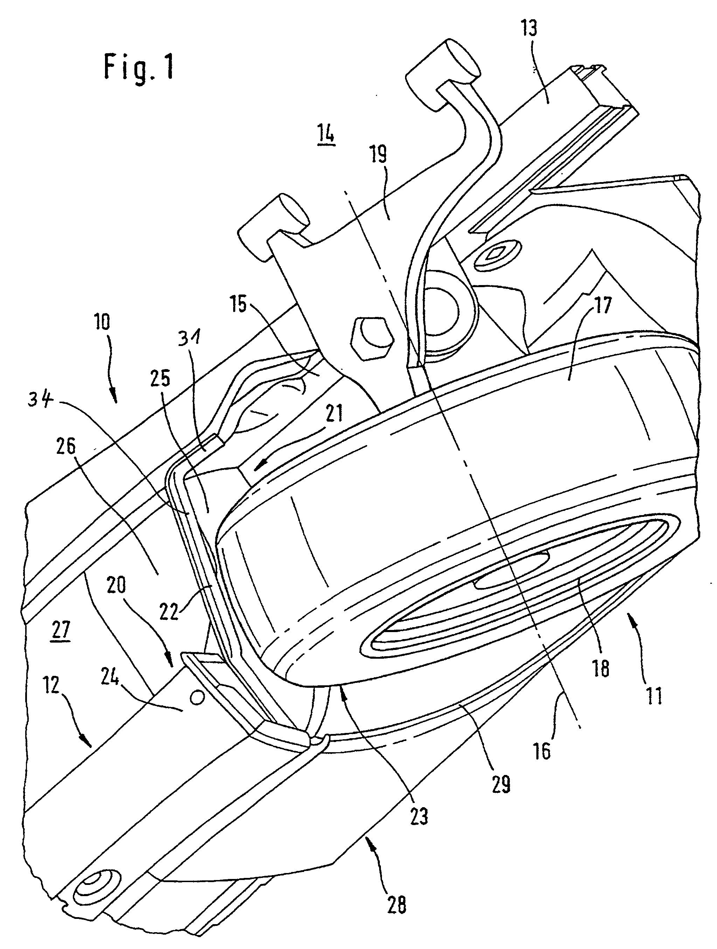

Fig.1 zeigt in ausschnittweiser, perspektivischer Unteransicht ein Kraftfahrzeug, mit dessen teilweise sichtbarer Rohbaustruktur 10 im Bereich des vorderen Radlaufes 11. Die Rohbaustruktur 10 umfaßt einen seitlichen Längsträger 12, der sich zwischen dem vorderen Radlauf 11 und einem hinteren, nicht gezeigten Radlauf in Fahrzeuglängsrichtung erstreckt, sowie einen vorderen, inneren Längsträger 13, der sich innerhalb einer vorderen Knautschzone 14 des Kraftfahrzeuges ebenfalls in Fahrzeuglängsrichtung erstreckt. Der innere Längsträger 13 grenzt dabei an eine Innenseite 15 des Radlaufes 11.

Innerhalb des vorderen Radlaufes 11 befindet sich das um eine Radachse 16 drehbare Vorderrad 17 mit seiner zugeordneten Radfelge 18. Von den das Vorderrad 17 führenden und tragenden Radführungsgliedern ist lediglich ein Dreiecksquerlenker 19 gezeigt.

Zwischen einem vorderen Endabschnitt 20 des seitlichen Längsträgers 12, der an eine hintere Seite 21 des vorderen Radlaufs 11 grenzt, und dem inneren Längsträger 13 ist eine Zugstrebe 22 angeordnet, die hier mit nicht dargestellten Schraubverbindungen an den Längsträgern 12,13 befestigt ist. Die Zugstrebe 22 ist mit einem die freie Lenkbeweglichkeit des Vorderrades 17 sicherstellenden Mindestabstand hinter dessen Abrollumfang 23 angeordnet. Der Endabschnitt 20 des seitlichen Längsträgers 12 ist als Pralltopf 24 ausgebildet, der besonders bevorzugte Energieabsorptionseigenschaften aufweist. Auf die Anordnung der Zugstrebe 22 und deren verschiedene Ausführungen wird insbesondere unter Bezugnahme der weiteren Figuren detaillierter eingegangen.

Die hintere Seite 21 des vorderen Radlaufes 11 bildet bereichsweise eine hinter der Zugstrebe 22 angeordnete Stirnwand 25, die den Fußraum der Frontpassagiere von dem Radlauf 11 unterteilt. Die Stirnwand 25 geht in einem Übergangsbereich 26 in den hinter ihr angeordneten Fahrzeugunterboden 27 über. Die äußere seitliche Begrenzung des Radlaufes 11 bildet ein Kotflügel 28, der im Bereich des Radlaufes 11 entsprechend ausgeschnitten ist. Nicht dargestellt ist bei diesem Ausführungsbeispiel eine innere Radlaufauskleidung, die von einem Radlauffalz 29 des Kotflügels 28 ausgehend im Inneren des Radlaufes 11 angeordnet ist. Die Zugstrebe 22 ist so ausgebildet und an den beiden Längsträgern 12,13 angeordnet, daß sie vollständig von der nicht dargestellten inneren Radlaufauskleidung überdeckt werden kann.

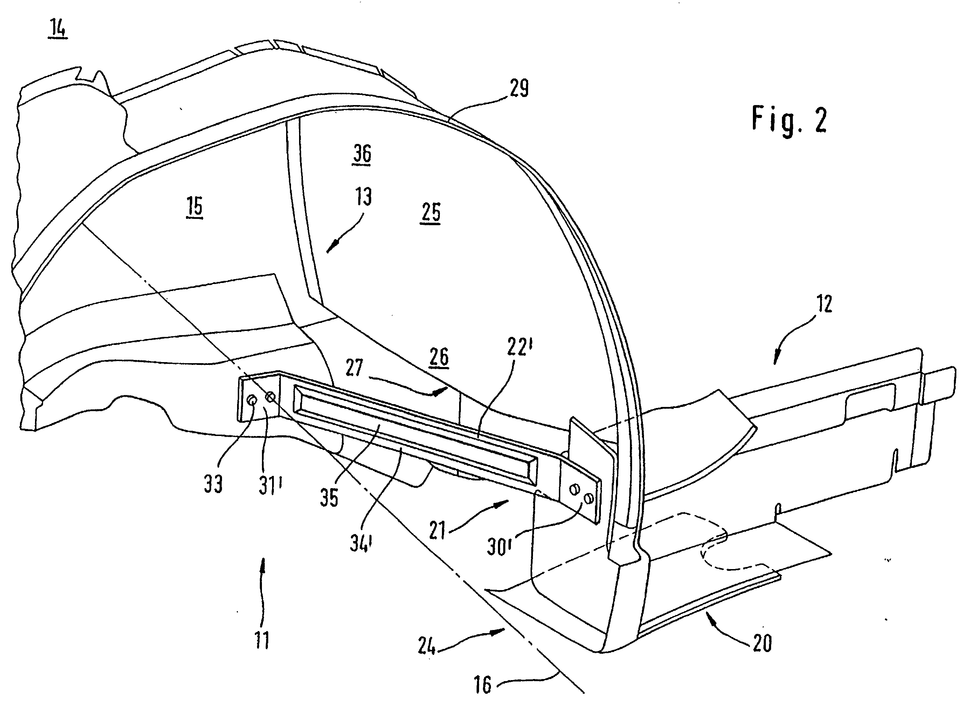

Fig.2 zeigt eine schematische Perspektivansicht der innerhalb des Radlaufes 11 angeordneten Zugstrebe 22' nach einer ersten Ausführungsform. Die Zugstrebe 22' besteht aus einem profilierten Zugband aus Stahlblech oder dgl. Werkstoff. Natürlich kann auch ein anderer Werkstoff metallischer oder nicht metallischer Art, z.B. ein Faserverbundwerkstoff, eingesetzt werden. Die Zugstrebe 22' ist an ihren beiden Befestigungsabschnitten 30',31' abgewinkelt und mit Hilfe von Schrauben 33 an dem vorderen Endabschnitt 20 des seitlichen Längsträgers 12 bzw. dem inneren Längsträger 13 befestigt. Die Zugstrebe 22 erstreckt sich zwischen den beiden Längsträgern 12,13 vorzugsweise in etwa waagerecht und unterhalb oder auf Höhe einer horizontalen Ebene, die durch die Radachse 16 des nicht gezeigten Vorderrades 17 festgelegt ist. In ihrem mittleren Fangabschnitt 34' weist die Zugstrebe 22 eine Sicke 35 auf, die die Verformungsund insbesondere die Biegesteifigkeit der Zugstrebe 22' erhöht.

Hinter der Zugstrebe 22' ist die Stirnwand 25 erkennbar, die von einem annähernd vertikal verlaufenden Abschnitt 36 über den Übergangsbereich 26 in den hier nicht erkennbaren Unterboden übergeht. Der Endabschnitt 20 des seitlichen Längsträgers 12 ist wiederum als Pralltopf 24 ausgebildet.

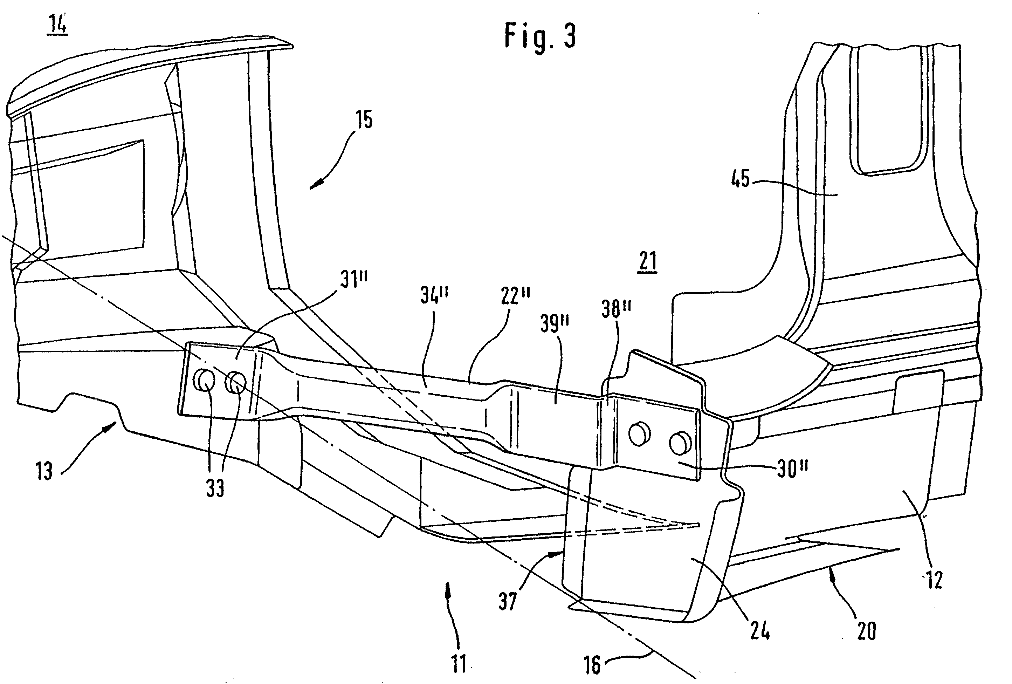

Fig.3 zeigt eine gegenüber Fig.2 vergrößerte schematische Perspektivansicht der innerhalb eines Radlaufes 11 angeordneten Zugstrebe 22'' nach einer besonders bevorzugten, zweiten Ausführungsform. Die Zugstrebe 22'' ist aus einem Rohr ovalen Querschnitts gebildet, die an ihren Enden im Bereich der Befestigungsabschnitte 30'',31'' gegen den Fangabschnitt 34'' abgewinkelt sowie flachgedrückt ist und an dem Endabschnitt 20 des seitlichen Längsträgers 12 sowie dem inneren Längsträgers 13 mit Schrauben 33 oder Nieten oder dgl. befestigt ist. Anstelle mit Hilfe der lösbaren Schraubverbindung kann die Zugstrebe 22'' auch mit einer unlösbaren Verbindung, z.B. einer Schweißverbindung, an der Rohbaustruktur 10 befestigt sein.

Von der Rohbaustruktur 10 ist in Fig.3 lediglich der vordere und der seitliche Längsträger 12,13 erkennbar, wobei oberhalb des seitlichen Längsträgers 12 ein unterer Teil 45 der A-Säule erkennbar ist.

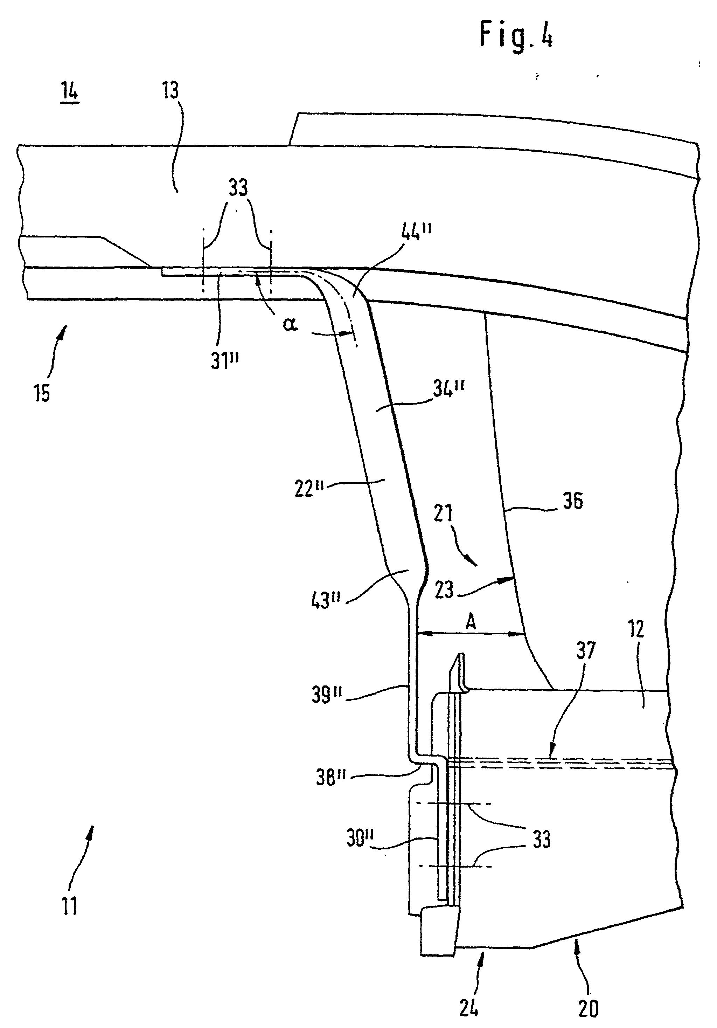

In Fig.4 ist ausschnittsweise eine Unteransicht auf die zwischen dem vorderen und dem seitlichen Längsträger 12,13 angeordneten Zugstrebe 22'' gemäß Fig.3 dargestellt. In Fahrtrichtung gesehen hinter der Zugstrebe 22'' ist der annähernd vertikale Abschnitt 36 der Stirnwand 25 erkennbar, die mit einem Mindestabstand A hinter der Zugstrebe 22'' angeordnet ist. Der Fangabschnitt 34'' der Zugstrebe 22'', der sich etwa waagerecht erstreckt, schließt mit dem dem vorderen Längsträger 13 zugewandten Befestigungsabschnitt 31 bzw. mit dem Längsträgers 13 einen Winkel α von etwa 100 - 140° ein. Selbstverständlich ist dieser Winkel α abhängig von dem jeweiligen Fahrzeugtyp und der Rohbaustruktur auch entsprechend größer oder kleiner wählbar. Der Winkel α ist außerdem so gewählt, daß die durch ein Vorderrad 17 bei einem Frontalaufprall auf die Zugstrebe 22'' ausgeübte Kraft sowohl mit einem möglichst großen Normalkraftvektor in den inneren Längsträger 13 eingeleitet wird und diesen vorzugsweise in seiner Längsrichtung belastet, als auch eine Abweisfunktion des auf der Zugstrebe 22'' auftreffenden Vorderrades 17 auf den Endabschnitt 20 des seitlichen Längsträgers 12 zu erreicht wird.

Etwa in Verlängerung einer inneren Längsträgerflanke 37 des seitlichen Längsträgers 12 hat die Zugstrebe 22'' eine Anlaufabkröpfung 38'', die die Zugstrebe 22'' an ihrem dem seitlichen Längsträger 12 zugewandten Ende in den flachgedrückten Befestigungsabschnitt 30'' und den Anlaufabschnitt 39'' unterteilt. Die Anlaufabkröpfung 38'' ist so ausgebildet, daß ein inneres oder äußeres Felgenhorn der Vorderradfelge 18 daran im Crashfall anlaufen kann. Dadurch soll verhindert werden, daß ein nach vorne außen eingeschlagenes Vorderrad 17 oder ein von schräg vorne nach hinten bewegtes Vorderrad 17 in den Bereich der Stirnwand 25 bewegt wird, sondern möglichst im Bereich des Endabschnittes 20 des seitlichen Längsträgers 12 bzw. des darin integrierten Pralltopfes 24 zum Abbau der Unfallenergie aufgenommen wird.

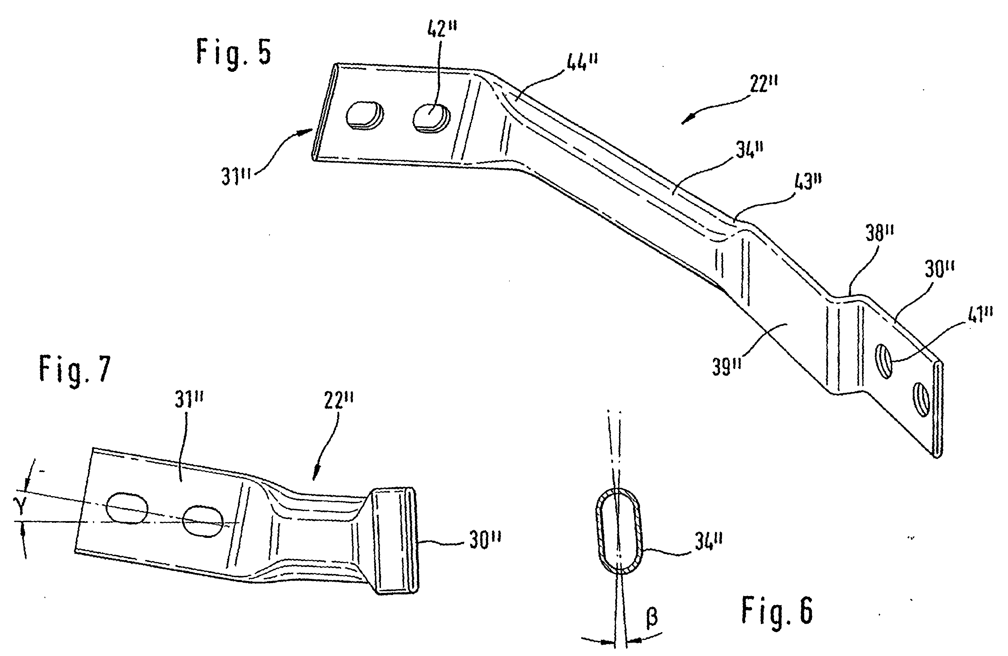

Fig.5 zeigt die Zugstrebe 22'' gemäß Fig.3, bei der in den beiden Befestigungsabschnitten 30'',31'' Langlöcher 41,42 vorgesehen sind, die zum horizontalen und vertikalen Toleranzausgleich der Zugstrebe 22'' dienen. Die flachgedrückten Befestigungsabschnitte 30'',31'' sind durch ihre flache, doppelwandige Struktur insbesondere zur Aufnahme großer Zugspannungen geeignet, die im Crashfall ausgehend von dem durch die Zugstrebe 22'' zunächst in seiner Bewegung aufgehaltenen Vorderrad 17 über die Schraubverbindung 33 in den inneren Längsträger 13 und damit in die vordere Knautschzone des Fahrzeuges eingeleitet wird. Der Fangabschnitt 34'' der Zugstrebe 22'' geht in zwei Übergangsabschnitten 43'',44'' in den Bereich der Befestigungsabschnitte 30'',31'' über, wobei die Übergangsabschnitte 43'',44'' so geformt und gefertigt sind, daß die Festigkeit der Zugstrebe 22'' in diesem Bereich kaum vermindert ist. Der ovale, in Fig.6 gezeigte Fangabschnitt 34'' ist so ausgebildet, daß er insbesondere großen Biege- und Zugkräften standhält. Der Querschnitt ist mit einem Winkel β von etwa 10° gegen die Vertikale geneigt, um ein sehr gutes Blockverhalten und eine besonders gute Rückhaltewirkung bei einem auftreffenden Vorderrad 17 zu erzielen.

Fig.7 zeigt eine Seitenansicht durch die Zugstrebe 22'' nach Fi.5 mit dem Befestigungsabschnitt 31'', der an dem Längsträger 13 befestigt ist. Der Befestigungsabschnitt 31'' ist mit einem Winkel γ von etwa 10 - 15° gegen die Horizontale nach oben geneigt und an einer nicht sichtbaren Aufnahme am Längsträgers 13 befestigt, um insbesondere hohen Zugkräften standzuhalten. Der Befestigungsabschnitt 30'' am entgegengesetzten Ende ist bevorzugt etwa waagerecht an einer Aufnahme an dem Endabschnitt 20 des seitlichen Längsträgers 12 befestigt.

## Patentansprüche

1. Schutzanordnung an einem Radlauf (11) einer Kraftwagen-Rohbaustruktur (10),
mit einer Knautschzone (14), insbesondere einer vorderen Knautschzone (14), in welcher sich zwei Längsträger (13) in Fahrzeuglängsrichtung und entlang der Innenseite des zugeordneten seitlichen Radlaufes (11) erstrecken;
mit einem Rad (17), das durch Radführungsglieder (19) innerhalb des zugeordneten Radlaufes (11) gehalten ist;
mit einer Stirnwand (25), die den Radlauf (11) auf seiner der Knautschzone (14) abgewandten Seite (21) zur Fahrgastzelle hin begrenzt;
und mit Mitteln zum Schutz vor übermäßiger Intrusion der Stirnwand (25) durch das im Crashfall sich gegen die Stirnwand (25) bewegende Rad (17), wobei die schützenden Mittel zwischen dem Abrollumfang (23) des Rades (17) und der Stirnwand (25) angeordnet sind, wobei
als Mittel zum Schutz der Stirnwand (25) vor übermäßiger Intrusion eine Zugstrebe (22,22',22'') mit einem Befestigungsabschnitt (31,31',31'') an dem zugeordneten Längsträger (13) befestigt ist und mit einem seitlichen Fangabschnitt (34,34',34'') seitlich und quer zu dem Längsträger (13) nach außen abragt,
**dadurch gekennzeichnet, daß** die Zugstrebe (22,22',22'') mit einem zweiten Befestigungsabschnitt (30,30',30'') an einem Endabschnitt (20) eines seitlichen Längsträgers (12) oder Längsträgerabschnitts befestigt ist, der sich in Fahrzeuglängsrichtung erstreckt und mit seinem Endabschnitt (20) an die von der Knautschzone (14) abgewandten Seite (21) des Radlaufes (11) angrenzt.

2. Schutzanordnung nach Anspruch 1,
**dadurch gekennzeichnet, daß** die Zugstrebe (22,22',22'') mit einem Mindestabstand (A) vor der Stirnwand (25) angeordnet ist.

3. Schutzanordnung nach Anspruch 1,
**dadurch gekennzeichnet, daß** die Zugstrebe (22,22',22'') unterhalb oder auf Höhe einer horizontalen Ebene durch eine Radachse (16) des Vorderrades (17) festgelegt ist.

4. Schutzanordnung nach Anspruch 1,
**dadurch gekennzeichnet, daß** der Fangabschnitt (34'') der Zugstrebe (22'') mit einem Seitenabschnitt (15'') des inneren Längsträgers (13) bzw. mit dem ersten Befestigungsabschnitt (31'') einen Winkel (α) von etwa 100 - 140° einschließt.

5. Schutzanordnung nach Anspruch 1,
**dadurch gekennzeichnet, daß** die Zugstrebe (22,22',22'') lösbar mit Schraubverbindungen (33) an dem inneren Längsträger (13) und dem Endabschnitt (20) des seitlichen Längsträgers (12) befestigt ist.

6. Schutzanordnung nach Anspruch 5,
**dadurch gekennzeichnet, daß** die Zugstrebe (22, 22', 22'') Langlöcher (41,42) zum Herstellen der Schraubverbindungen (33) aufweist, die zum horizontalen und vertikalen Toleranzausgleich der Zugstrebe (22,22',22'') dienen.

7. Schutzanordnung nach Anspruch 1,
**dadurch gekennzeichnet, daß** die Zugstrebe (22,22',22'') unlösbar mit einer Schweiß- oder einer Nietverbindung oder dgl. an dem Endabschnitt (20) des seitlichen Längsträgers (12) und dem inneren Längsträger (13) befestigt ist.

8. Schutzanordnung nach Anspruch 1,
**dadurch gekennzeichnet, daß** der Endabschnitt (20) des seitlichen Längsträgers (12) als Pralltopf (24) ausgebildet ist.

9. Schutzanordnung nach Anspruch 1,
**dadurch gekennzeichnet, daß** die Zugstrebe (22,22',22'') aus einem Faserverbundwerkstoff, einem hochfestem Metallwerkstoff, z.B. einem profilierten Zugband aus Stahlblech oder dgl. besteht.

10. Schutzanordnung nach Anspruch 1,
**dadurch gekennzeichnet, daß** die Zugstrebe (22'') aus einem Rohr gebildet ist, deren Enden im Bereich der Befestigungsabschnitte (30,30',30'';31,31',31'') flachgedrückt sind.

11. Schutzanordnung nach Anspruch 10,
**dadurch gekennzeichnet, daß** das Rohr zwischen den flachen Befestigungsabschnitten (30'',31'') im Bereich des Fangabschnittes (34'') einen ovalen Querschnitt aufweist.

12. Schutzanordnung nach Anspruch 1,
**dadurch gekennzeichnet, daß** die Befestigungsabschnitte (30,30',30'';31,31',31'') der Zugstrebe (22,22',22'') zu dem Fangabschnitt (34,34',34'') abgewinkelt sind.

13. Schutzanordnung nach Anspruch 1,
**dadurch gekennzeichnet, daß** die Zugstrebe (22'') eine Anlaufabkröpfung (38'') aufweist, die sich etwa in Verlängerung einer inneren Längsträgerflanke (37) des seitlichen Längsträgers (12) befindet.

14. Schutzanordnung nach Anspruch 1,
**dadurch gekennzeichnet, daß** die Zugstrebe (22'') einen Anlaufabschnitt (39'') aufweist, der sich in etwa senkrecht zu der Fahrzeuglängsrichtung erstreckt und zwischen dem Fangabschnitt (34'') und dem zweiten Befestigungsabschnitt (31'') angeordnet ist.

15. Schutzanordnung nach Anspruch 1,
**dadurch gekennzeichnet, daß** die Zugstrebe (22,22',22'') so innerhalb des Radlaufes (11) angeordnet ist, daß sie von einer inneren Radlaufabdeckung überdeckbar ist.

## Claims

1. A protective arrangement on a wheel housing (11) of a motor vehicle shell (10),
having a crumple zone (14), in particular a front crumple zone (14), in which two longitudinal members (13) extend in the vehicle longitudinal direction and along the internal face of the associated lateral wheel housing (11);
having a wheel (17) retained inside the associated wheel housing (11) by wheel guide members;
with a front wall (25) separating the wheel housing (11) from the passenger compartment at its face (21) remote from the crumple zone (14);
and means for protecting the front wall (25) against excessive penetration by the wheel (17) as it moves against the front wall (25) in the event of a collision, the protective means being arranged between the tread circumference (23) of the wheel (17) and the front wall (25),
the means for protecting the front wall (25) against excessive penetration being a tension strut (22, 22', 22") with a mounting section (31, 31', 31") secured to the associated longitudinal member (13) and an intercepting section (32, 34', 34") projecting outwards to the side of and transversely to the longitudinal member (13),
**characterised in that** the tension strut (22, 22', 22") is secured by a second mounting section (30, 30', 30") to an end portion (20) of a lateral longitudinal member (12) or longitudinal member portion extending in the vehicle longitudinal direction and adjoins the face (21) of the wheel housing (11) remote from the crumple zone (14) at its end portion (20).

2. Protective arrangement as claimed in claim 1,
**characterised in that** the tension strut (22, 22', 22") is arranged at a minimum distance (A) in front of the front wall (25).

3. Protective arrangement as claimed in claim 1,
**characterised in that** the tension strut (22, 22', 22") is fixed underneath or on a level with a horizontal plane defined by an axle (16) of the front wheel (17).

4. Protective arrangement as claimed in claim 1,
**characterised in that** the intercepting section (34") of the tension strut (22") subtends an angle (α) of approximately 100 - 140° with a side portion (15") of the inner longitudinal member (13) and the first mounting section (31").

5. Protective arrangement as claimed in claim 1,
**characterised in that** the tension strut (22, 22', 22") is detachably fixed to the inner longitudinal member (13) and the end portion (20) of the lateral longitudinal member (12) by means of screw connections (33).

6. Protective arrangement as claimed in claim 5,
**characterised in that** the tension strut (22, 22', 22") has slots (41, 42) for providing the screw connections (33), which compensate horizontal and vertical tolerances of the tension strut (22, 22', 22").

7. Protective arrangement as claimed in claim 1,
**characterised in that** the tension strut (22, 22', 22") is non-detachably fixed to the end portion (20) of the lateral longitudinal member (12) and the inner longitudinal member (13) by means of a weld or rivet connection or similar.

8. Protective arrangement as claimed in claim 1,
**characterised in that** the end portion (20) of the lateral longitudinal member (12) is provided in the form of an impact absorber (24).

9. Protective arrangement as claimed in claim 1,
**characterised in that** the tension strut (22, 22', 22") is made from a composite fibre material or a high-strength metallic material, e.g. a profiled tension strip made from sheet steel or similar.

10. Protective arrangement as claimed in claim 1,
**characterised in that** the tension strut (22") is provided in the form of a tube, the ends of which are pressed flat in the region of the mounting sections (30, 30', 30"; 31, 31', 31").

11. Protective arrangement as claimed in claim 10,
**characterised in that** the tube has an oval cross section in the region of the intercepting section (34") between the flat mounting sections (30", 31").

12. Protective arrangement as claimed in claim 1,
**characterised in that** the mounting sections (30, 30', 30"; 31, 31', 31") of the tension strut (22, 22', 22") are angled relative to the intercepting section (34, 34', 34'').

13. Protective arrangement as claimed in claim 1,
**characterised in that** the tension strut (22") has a stop-bend (38") disposed more or less in the extension of an inner longitudinal member flank (37) of the lateral longitudinal member (12).

14. Protective arrangement as claimed in claim 1,
**characterised in that** the tension strut (22") has a stop section (39") extending substantially perpendicular to the vehicle longitudinal direction and disposed between the intercepting section (34") and the second mounting section (31").

15. Protective arrangement as claimed in claim 1,
**characterised in that** the tension strut (22, 22', 22") is arranged within the wheel housing (11) so as to be covered by an inner wheel housing lining.

## Revendications

1. Dispositif de protection sur un passage de roue (11) d'une coque autoporteuse (10) d'un véhicule automobile, comprenant :
- une zone déformable (14), en particulier une zone déformable (14), à l'avant, dans laquelle deux longerons (13) s'étendent en direction longitudinale du véhicule et le long du côté intérieur du passage de roue latéral associé (11) ;
- une roue (17) qui est retenue à l'intérieur du passage de roue associé (11), par des éléments (19) de guidage de la roue ;
- un tablier (25) qui limite, en direction de l'habitacle, le passage de roue (11) sur son côté (21) placé à l'opposé de la zone déformable (14) ; et
- des moyens de protection contre une intrusion excessive du tablier (25) provoquée par la roue (17) se déplaçant contre le tablier (25) en cas d'accident, où les moyens de protection sont disposés entre la circonférence de roulement (23) de la roue (17) et le tablier (25),
où un renfort (22, 22', 22''), servant de moyen de protection du tablier (25) contre une intrusion excessive, est fixé sur le longeron associé (13) par une partie de fixation (31, 31', 31'') et, par une partie de retenue latérale (34, 34', 34''), dépasse vers l'extérieur, latéralement et transversalement par rapport au longeron (13),
**caractérisé**
- **en ce que** le renfort (22, 22', 22'') est fixé par une seconde partie de fixation (30, 30', 30''), sur une partie d'extrémité (20) d'un longeron latéral (12) ou d'une partie du longeron qui s'étend en direction longitudinale du véhicule et, par sa partie d'extrémité (20), est contigu au côté (21) du passage de roue, placé à l'opposé de la zone déformable (14).

2. Dispositif de protection selon la revendication 1,
**caractérisé en ce que** le renfort (22, 22', 22'') est disposé devant le tablier (25), en étant espacé par un écartement minimal (A).

3. Dispositif de protection selon la revendication 1,
**caractérisé en ce que** le renfort (22, 22', 22'') est fixé au-dessous ou à la hauteur d'un plan horizontal traversant un essieu (16) de la roue avant (17).

4. Dispositif de protection selon la revendication 1,
**caractérisé en ce que** le partie de retenue (34'') du renfort (22'') forme avec une partie latérale (15'') du longeron intérieur (13) ou avec la première partie de fixation (31'') un angle α compris environ entre 100° et 140°.

5. Dispositif de protection selon la revendication 1,
**caractérisé en ce que** le renfort (22, 22', 22'') est fixé de façon démontable, par des assemblages vissés (33), sur le longeron intérieur (13) et sur la partie d'extrémité (20) du longeron latéral (12).

6. Dispositif de protection selon la revendication 5,
**caractérisé en ce que** le renfort (22, 22', 22") comprend des trous oblongs (41, 42) pour réaliser les assemblages vissés (33), lesquels trous oblongs servent à la compensation de tolérance horizontale et verticale du renfort (22, 22', 22'').

7. Dispositif de protection selon la revendication 1,
**caractérisé en ce que** le renfort (22, 22', 22'') est fixé de façon non démontable, par un raccord soudé ou riveté ou par un raccord analogue, sur la partie d'extrémité (20) du longeron latéral (12) et sur le longeron intérieur (13).

8. Dispositif de protection selon la revendication 1,
**caractérisé en ce que** la partie d'extrémité (20) du longeron latéral (12) est configurée comme un élément absorbant les chocs (24).

9. Dispositif de protection selon la revendication 1,
**caractérisé en ce que** le renfort (22, 22', 22'') se compose d'un matériau composite renforcé par des fibres, d'un matériau métallique à résistance élevée, par exemple un tirant profilé d'une tôle d'acier ou d'un matériau analogue.

10. Dispositif de protection selon la revendication 1,
**caractérisé en ce que** le renfort (22'') est constitué d'un tuyau dont les extrémités sont aplaties dans la zone des parties de fixation (30, 30', 30'' ; 31, 31', 31'').

11. Dispositif de protection selon la revendication 10,
**caractérisé en ce que** le tuyau a une section ovale dans la zone de la partie de retenue (34''), entre les parties de fixation aplaties (30'', 31'').

12. Dispositif de protection selon la revendication 1,
**caractérisé en ce que** les parties de fixation (30, 30', 30'' ; 31, 31', 31'') du renfort (22, 22', 22'') sont coudées par rapport à la partie de retenue (34, 34', 34'').

13. Dispositif de protection selon la revendication 1,
**caractérisé en ce que** le renfort (22'') présente un coude initial (38'') qui se trouve à peu prés dans le prolongement d'un flanc de longeron intérieur (37) du longeron latéral (12).

14. Dispositif de protection selon la revendication 1,
**caractérisé en ce que** le renfort (22') comprend une partie initiale (39'') qui s'étend à peu près perpendiculairement à la direction longitudinale du véhicule et est disposée entre la partie de retenue (34'') et la seconde partie de fixation (31'').

15. Dispositif de protection selon la revendication 1,
**caractérisé en ce que** le renfort (22, 22', 22'') est disposé à l'intérieur du passage de roue (11) de façon telle, que le renfort peut être recouvert par un recouvrement intérieur du passage de roue.
